# EUROPEAN PATENT APPLICATION

(11) **EP 4 020 255 A1**
(43) Date of publication of application: **29.06.2022**
(21) Application number: 21157039.5
(22) Date of filing: 15.02.2021
(51) Int. Cl.: G06F 16/36

(54) **SEMANTIC MODELS**

(30) Priority: 23.12.2020 WO PCT/CN2020/138575
(71) Applicant: Koninklijke Philips N.V., 5656 AG Eindhoven (NL)
(72) Inventor: ZHANG, Alan, 5656 AE Eindhoven (NL); GE, Essien, 5656 AE Eindhoven (NL)
(74) Representative: Philips Intellectual Property & Standards

(57) **Abstract**

Proposed are concepts for generating a contextualized semantic model. In particular, it is proposed to leverage context information from multiple levels of an existing semantic model. By combining the context information from the multiple levels, the semantic model may be refined so as to generate a contextualized semantic model.

## Description

### FIELD OF THE INVENTION

The invention relates to interoperability between different information systems or digital services and more particularly to constructing a contextualized semantic model for supporting interoperability between different information systems.

### BACKGROUND OF THE INVENTION

Interoperability between different information systems or digital services is important in many different fields, especially healthcare. In healthcare, data exchange schema and standards allow data sharing across clinicians, lab, hospital, pharmacy and patient regardless the application or application vendor. However, a lack of interoperability is a hurdle for building connected healthcare digital services ecosystems within or across organizational boundaries.

Interoperability requires both content and technical standards. As IEEE explains in a position paper calling for interoperability in the healthcare context, interoperability "means not only that healthcare systems must be able to communicate with one another, but also that they must employ shared terminology and definitions." In other words, not only must electronic files utilize the same technical protocols, but they also must utilize the same data-entry vocabularies, or, at the very least, be capable of mapping commonly used vocabularies and coding systems to one another in a way that preserves the meaning of the content.

In the field healthcare domain, efforts have been invested addressing interoperability problems. Standardization is the main area of interoperability that has received focus. Most healthcare organizations have achieved an initial step of foundational interoperability for allowing electronic data exchange in predetermined and well-understood formats. There remains, however, the problem of achieving the next level of structural interoperability to provide the capability for IT systems to interpret data at field level.

Use of the Fast Healthcare Interoperability Resources (FHIR) standard is a known approach to providing data exchange capabilities. FHIR is an internet-based standard that provides common ground for developers and providers aiming to move away from proprietary architecture and a "walled garden" approach to data management. However, FHIR presents its own set of challenges that may not help to move the industry to true semantic interoperability.

For instance, the problem of semantic interoperability remains. Semantic Interoperability is 'the ability to import utterances from another computer without prior negotiation, and have your decision support, data queries and business rules continue to work reliably against these utterances.'

This invention describes a context-aware semantic model to help reduce semantic ambiguity, improve semantic expressivity and completeness.

### SUMMARY OF THE INVENTION

The invention is defined by the claims.

In accordance with one aspect, there is provided a method for constructing a contextualized semantic model, comprising: extracting context information at multiple levels; and refining a semantic model by combining the context information at multiple levels so as to generate a contextualized semantic model.

By way of example, proposed concepts may facilitate generation of a contextualized semantic repository based on service requirements and data standards. In this way, contexts and data standards (which may be employed in an existing semantic model with standardized terminology) may be leveraged to provide a refined semantic repository (i.e. contextualized semantic model).

According to one or more proposed concepts, semantic gaps may drive the development of the semantic repository. Semantic gaps may include different levels of context information (e.g. data element context, data model context, service data context, etc.), and those context gaps may be identified and leveraged to update the contexts in the contextualized semantic model. With the context information updated, the contextualized semantic model may be refined/modified/updated.

Some embodiments may further comprise: segmenting a service request into a plurality of semantic segments based on the contextualized semantic model; identifying a semantic gap comprising context information between the semantic segments and the contextualized semantic model based on comparing the semantic segments with a plurality of semantic building blocks; and modifying the contextualized semantic model to resolve the identified semantic gap.

Further, modifying the contextualized semantic model to resolve the identified semantic gap may further comprise refining one or more semantic building block corresponding to a semantic gap. For example, the contextualized semantic model may comprise a first data element block, a second data element block, a first data model block, a second data model block and a service data model block.

Yet further, embodiments may comprise: obtaining first data elements, wherein at least one of the first data elements with ambiguous semantics; obtaining data element contexts of the first data elements; generating second data elements with unambiguous semantics, by combining the corresponding data element contexts with the one of the first data elements; refining first data models based on data elements with unambiguous semantics from at least one of the second data elements and first data elements, wherein at least one of the first data models with ambiguous semantics; obtaining data model contexts of the first data models; generating second data models with unambiguous semantics, by combining the corresponding data model context with the one of the first data models; obtaining service data contexts from service request data model and service response data model; and refining service data models based on the first data models, second data models, first data elements or second data elements by combining service data contexts.

For example, the semantic gaps may be instances where, for one or more of the semantic segments, there is no equivalent elements, data models, service data models that in a semantic building block.

In some embodiments, refining corresponding data element, data model or service data model may further comprise creating a new data element, data model or service data model in the semantic building blocks corresponding to the semantic gaps based on the context information.

By way of example, the semantic gaps may include semantic ambiguities, the semantic ambiguities being instances where the associated semantic term of the contextualized semantic model is ambiguous for the service request.

Identifying semantic gaps may comprise comparing the semantic segments of service request with the existing service data model, the data models, and the data elements by sequence.

Semantic gaps identification may include identifying context information at data element level, data model level and service data model level.

By way of example, the existing semantic model may be based on at least one of HL7 RIM and SNOMED CT.

The semantic building blocks may be stored in a semantic repository, and the method may further comprise: updating a semantic repository based on the one or more semantic gaps.

According to another aspect of the invention, there is provided a computer program product comprising computer program code means which, when executed on a computing device having a processing system, cause the processing system to perform all of the steps of the method according to a proposed embodiment. Thus, according to examples in accordance with an aspect of the invention, there is provided a computer program comprising code means for implementing the method of any preceding claim when said program is run on a processing system.

According to another aspect of the invention, there is provided a system for constructing a contextualized semantic model, comprising: an extraction component configured to extract context information at multiple levels; and a modelling component configured to refine a semantic model by combining the context information at multiple levels so as to generate a contextualized semantic model.

Proposed embodiments may provision a context-aware semantic model to help reduce semantic ambiguity, improve semantic expressivity and completeness.

Still further advantages of the present invention will be appreciated to those of ordinary skill in the art upon reading and understand the following detailed description.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a schematic illustration of semantic model;
Fig. 2 is a schematic illustration of the generation of a contextualized semantic model according to an embodiment;
Fig. 3 is a flow chart illustrating a method according to an embodiment of the invention; and
Fig. 4 is simplified block diagram of a system according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides concepts for generating a contextualized semantic model. In particular, it is proposed to leverage context information from multiple levels of an existing semantic model. By combining the context information from the multiple levels, the semantic model may be refined so as to generate a contextualized semantic model.

Proposed embodiments may therefore be employed to provide a context-aware semantic model that helps to reduce semantic ambiguity and/or improve semantic expressivity and completeness.

Purely by way of example, embodiments may employ one or more concepts for building a service data semantic model under a given context. For instance, combined with the terminology (data element) and information structure (data model) level data semantics, proposed embodiments may also introduce service and context level semantics. The terminology level data semantics may provide the foundation meaning of a data element, and the information model level may define data semantics as a group (e.g. entity or associated description). While both the context level and service level may provide restrictions or extensions to the existing terminology and information structure level data semantics, the application scope of the enhanced semantics (e.g. restrictions or extensions) are different. Also, the data semantics in the context level have broader application scenario than the service level, but the service level data semantics deal with specific data semantics in a particular given service. Thus, a service data semantic model based on those four different levels improves the data interoperability from a data level to a service level

Proposed embodiments may thus, for example, facilitate generation of a contextualized semantic repository based on service requirements and data standards. Contexts and data standards of a semantic model may therefore be used to provide a refined semantic repository (i.e. contextualized semantic model).

According to a concept of the invention, there is proposed a method and system for constructing a contextualized semantic model. Context information at multiple different levels of a semantic model is extracted. The semantic model is then refined (to generate a contextualized semantic model) by combining the context information at multiple levels.

Illustrative embodiments may, for example, be employed in relation to healthcare-related digital services.

Implementations in accordance with the present disclosure relate to various systems, adaptions, and/or methods for providing contextualized semantic model. According to proposed concepts, a number of possible solutions may be implemented separately or jointly. That is, although these possible solutions may be described below separately, two or more of these possible solutions may be implemented in one combination or another.

A proposed embodiment may be configured to generate service data based on service requirements and a service data repository. Such an embodiment may therefore address the issue that a data element (e.g. data field), data model (data structure), and/or service data model may have ambiguity.

Ambiguity occurs where the formal representation of semantics is open to two or more interpretations. Ambiguity may therefore exist in terminology and/or in data models. For example, the SNOMED CT standard has a code 'country of origin,' which, from a product perspective, might mean 'place where manufactured,' whereas, from a public health perspective, this might mean 'country visited before returning to the United States' or 'country where a person was raised.

Context information (e.g., incomplete context) may therefore lead to more than two interpretations of one data element or data model. Thus, reference to 'context' should be taken to refer to one or more aspects of an observation that potentially bear on or alter interpretation of the observation.

For example, contextual characteristics of an observation (such as 'blood sugar is high') may include: the subject of the observation (e.g. whether the observation is about the patient or a family member); negation (e.g. an assertion that an observation is false or did not occur); observation mood (e.g. whether the observation actually occurred or is a criterion for action, should it occur); and temporal characteristics (e.g. whether the observation is true at this time vs at some time in the past).

Failure to consider contextual aspects of an observation can result in misinterpretation. For example, failure to account for a negation indicator field can result in significant data misinterpretation. Likewise, failure to account for a 'father' code communicated in a different field can result in an observation about a family member being interpreted as an observation about the patient.

By way of further example, since a data element (data field), a data model (data structure), and/or a service data model may have polysemy issue, context information may influence results returned by in response to a service request. For instance, if a user provides a service request (e.g. a service request to generate a patient's clinical report based on patent's basic lab tests relevant to liver cancer from in current two months), context information (e.g. timestamp information) may indicate a starting time point (e.g. Oct. 5th, 2020) and thus infer an ending time point (e.g. Dec. 5th, 2020). Without considering the context information, more results (e.g., all historical lab rests relevant to liver cancer) will be returned in response to the service request.

To address this issue of not considering context information, it is proposed to provide a contextualized semantic model which reduces or minimizes semantic gap(s) by introducing multiple levels of context (e.g. data element context level, data model context level, service data context level). Such multiple levels of context information may be obtained manually, automatically, or semi-automatically from service request, service response, sample service request, sample service response, and/or documents (e.g., article, paper, medical reports, dictionary) that include context information. In one exemplary embodiment, such multiple levels of context information may be obtained based on the background knowledge and identified semantic gaps. In another embodiment, the multiple levels of context information may further be based on a semantic model.

In the following description of the proposed concept(s) and illustrative embodiments, 'data' denotes the data required by a digital service and also the digital service itself.

A service is modelled as a type of data. This enables a context to be assigned a service, which may bring more specific semantic to the service (and the data within the service). It also means that the structure of the data may be leveraged. For example, by using contains relationship between different data objects, services can be described as comprising other sub-services.

The smallest data unit that can be model is a data field. Usually, this is related to terminology or vocabulary. In practice, a complex data unit can be a combination of other data fields. Any combination of data fields could be modelled as a data structure. That is, from extending a data component, any combination of data Structures and data Fields may be modelled to a new composite data structure.

With reference to the meaning of 'context', proposed concepts model any aspects that may bring more specific semantic meaning to data in the digital service(s). A context may be labelled from the application scope, which includes service context, data structure context and data field context. Thus, a context relationship (i.e. the relationship between contexts) may be modelled as independent parts, which contain source context and target context. Based on such an approach, any meaningful context network can be built on demand.

From a data structure perspective, the context network may be viewed as a Directed Acyclic Graph, wherein each node of the graph is a context, and wherein each edge of the graph represents a relationship between the contexts (i.e. nodes) it connects. A Context Relationship Type may also be defined for each relationship, which provides a semantic meaning about the relationship. For example, 'is-a' relationship type can be interpreted as: A Source Context is a subtype of a Target Context, given that the relationship type is 'is-a'.

The applicable scope of a context may be restricted by specifying the associated property 'Applicable Scope'. For example, a context only applicable in service context can be specified, means that context should not be used in any other data blocks (like Data Structure and Data Field except for a Service).

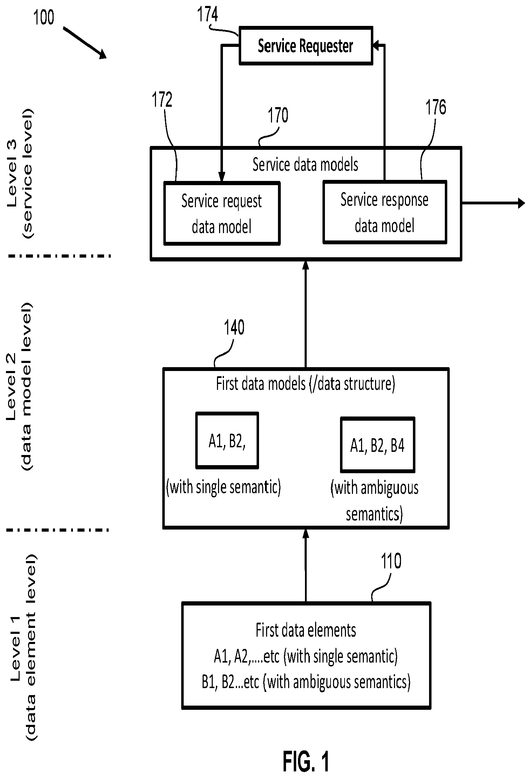

Referring to Fig. 1, an example of existing semantic model 100 is shown. In this example, the existing semantic model 100 may, for example, be based on at least one of HL7 RIM and SNOMED CT standards.

At the first (bottom/lowest) level "Level 1", there are first data elements 110. As depicted, the first data elements 110 comprise data elements A1, A2, ...each having a single semantic meaning. The first data elements 110 also comprise data elements B1, B2, ... each having ambiguous semantic meaning.

At the second level "Level 2", there are first data models 140. The first data elements 110 from the first level (Level 1) are provided to the first data models 140 of the second level (Level 2). As depicted, the first data models 140 comprise data models A1, B2, ... each having a single semantic meaning. The first data models 140 also comprise data elements A1, B2, B4, ... each having ambiguous semantic meaning.

At the third (top/highest) level "Level 3", there are service data models 170. The first data elements 110 and the first data models 140 are provided to the service data models 170 of the third level (Level 3). The service data models 170 comprise a service request data model 172 which is configured to receive service requests from a service requester 174. The service data models 170 also comprise a service response data model 176 for service responses issued back to service requester 174.

Thus, as depicted in Fig. 1, the semantic model 100 comprises a set of first data elements 110, a set of first data models 140, and a set of service data models 170, each of which may comprise ambiguous semantics.

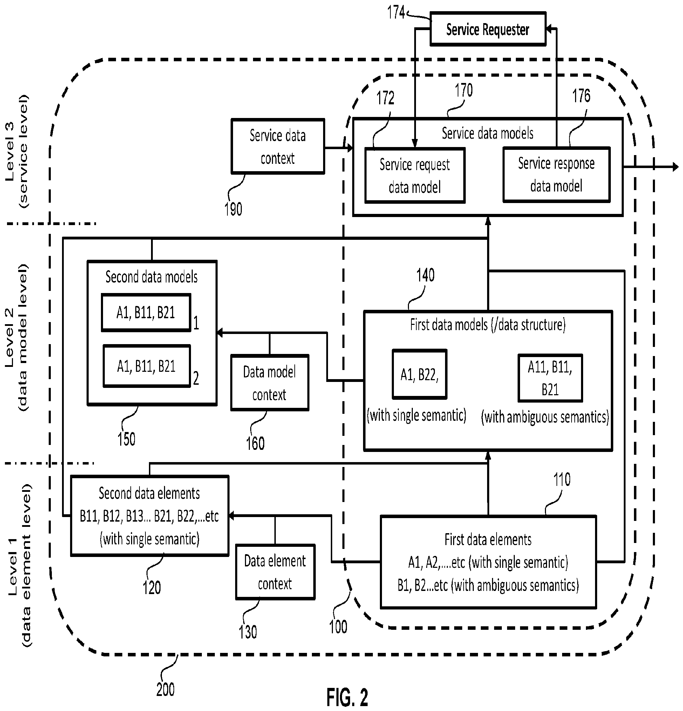

Referring to Fig. 2, an existing semantic model 100 (such as that depicted in Fig. 1) may be refined to provide a contextualized semantic model 200. This is done by extracting context information at multiple levels, and the refining the semantic model 100 by combining the context information at multiple levels (so as to generate the contextualized semantic model 200).

In this example of the Fig. 2, the existing semantic model 100 may, for example, be based on at least one of HL7 RIM and SNOMED CT standards.

At the first (bottom/lowest) level "Level 1", there are first 110 and second 120 data elements. As depicted, the first data elements 110 comprise data elements A1, A2, ...each having a single semantic meaning. The first data elements 110 also comprise data elements B1, B2, ... each having ambiguous semantic meaning. Further, data element context information 130 is provided in the first level (Level 1). The second data elements 120 therefore comprise data elements B11, B12, ...each having a single semantic meaning (as a result of the data element context 130).

At the second level "Level 2", there are first 140 and second 150 data models. The first 110 and second 120 data elements from the first level (Level 1) are provided to the first data models 140 of the second level (Level 2). As depicted, the first data models 140 comprise data models A1, B22, ... each having a single semantic meaning. The first data models 140 also comprise data elements A11, B11, B21, ... each having ambiguous semantic meaning. Further, data model context information 160 is provided in the second level (Level 2). The second data models 150 therefore comprise data models each having a single semantic meaning (as a result of the data model context 160).

At the third (top/highest) level "Level 3", there are service data models 170. The first data elements 110 and the first 140 and second 150 data models are provided to the service data models 170 of the third level (Level 3). Further, service data context information 190 is provided to the service data models 170 in the third level (Level 3).

Thus, as depicted in Fig. 2, the contextualized semantic model 200 comprises a set of first data elements 110, a set of second data elements 120, a set of first data models 140, a set of second data models 150, and a set of service data models 170.

A service request is segmented into a plurality of semantic segments based on the contextualized semantic model 200. Based on comparing the semantic segments of service(s) (e.g., service request) with a plurality of semantic building blocks, a semantic gap comprising context information between the semantic segments and the contextualized semantic model can be identified. For example, a semantic gap may be an instance where, for one or more of the semantic segments, there is no equivalent elements, data models, service data models in a semantic building block. Also, semantic gaps may include semantic ambiguities, the semantic ambiguities being instances where the associated semantic term of the contextualized semantic model is ambiguous for the service request.

For instance, identifying semantic gaps may comprise comparing a semantic segments of service request with the existing service data model(s) 170, the data models 140,150, and the data elements 110,120 by sequence. Identifying semantic gaps may include context information at the data element level (i.e. Level 1), the data model level (i.e. Level 2) and service data model level (Level 3).

More specifically, comparing the semantic segments with the service data model(s) 170 at the third level (Level 3) firstly. If the semantic segments are matched to one or more service data model(s) 170, there is no need to compare semantic segments with the data models 140,150 and the data elements 110,120. As a result, no semantic gap is identified in this case. In response to the service request from the service requester 174, a service response can be generated based on the matched service data model(s) 170 and then issued back to the service requester 174.

If the semantic segments are not matched to a service data model 170 at the third level (Level 3), or only partially matched to the service data models 170, there is a need to compare the semantic segments with data models 140, 150 at the second level (Level 2). If one or more service data models 170 at the third level and one or more data models 140, 150 at the second level can match the semantic segments, there is no need to compare semantic segments with the data elements 110,120 in the first level (Level 1). As a result, a semantic gap at the third level is identified. In response to the service request from the service requester 174, a service response can be generated based on the matched set of service data model(s) 170 and the matched set of data models 140, 150 and then issued back to the service requester 174.

If the semantic segments are not matched to a service data model 170 at the third level, or matched to a data model 140, 150 at the second level, or only partially matched to the service data models 170 or the data model 140, 150, there is a need to compare the semantic segments with the data elements 110,120 at the first level (Level 1). In that case, if one or more service data models at the third level, one or more data models at the second level and one or more data elements at the first level can match the semantic segments, semantic gap at the third level and semantic gap at the second level are identified. In response to the service request from the service requester 174, a service response can be generated based on the matched set of service data model(s) 170, matched set of data models 140, 150 and matched set of data elements 110, 120 and then issued back to the service requester 174.

If one or more service data models at the third level, one or more data models at the second level and one or more data elements can't match the semantic segments still, a semantic gap at the third level, a semantic gap at the second level, and a semantic gap at the first level are identified. In response to the service request from the service requester 174, a service response can be generated based on the matched set of service data model(s) 170, matched set of data models 140, 150 and matched set of data elements 110, 120 and then issued back to the service requester 174.

Although the service response may not 100% match the service request in some cases, the closest service response can be issued back to the service requester 174. With the context information updated based on the identified semantic gaps, the contextualized semantic model 200 may be refined/modified/updated. The semantic building blocks with updated context information is helpful to make the service response much more closer to the service request with the semantic gaps between the service request and service response gradually resolved which will be illustrated below.

The contextualized semantic model 200 can then be modified (i.e. refined) to resolve the identified semantic gap.

By way of example, modifying the contextualized semantic model to resolve the identified semantic gap may include refining one or more semantic building block corresponding to the identified semantic gap.

In more detail, as depicted by the arrows in Fig. 2, first data elements 110 with ambiguous semantics may be obtained along with data element contexts 130 of the first data elements. The second data elements 120 (with unambiguous semantics) are generated by combining the corresponding data element contexts 130 with the first data elements 110.

Based on the data elements with unambiguous semantics (from at least one of the first 110 and second 120 data elements), the first data models 140 are refined. Also, data model contexts 160 of the first data models 140 are obtained. The second data models 150 (with unambiguous semantics) are generated by combining the corresponding data model contexts 160 with the first data models 140.

For the service data models 170, service data contexts 190 are obtained from the service request data model 192 and service response data model 194 of the service data context 190. The service data models 170 are refined based on the first data models 140, second data models 150, first data elements 110 or second data elements 120 by combining the obtained service data contexts 190.

Purely by way of example, refining a corresponding data element, data model or service data model (as mentioned above) may include creating a new data element, data model or service data model in the semantic building block(s) corresponding to the semantic gaps based on the corresponding context information.

Where the semantic building blocks are stored in a semantic repository, the semantic repository may be updated based on identified semantic gap(s).

To implement proposed embodiment, identifying a required context is an important consideration for addressing semantic conflicts between requirements from a digital service and existing semantic-related standards. The appropriate contexts make a reusable semantic building block more accurate than the meaning described in the pre-defined standard.

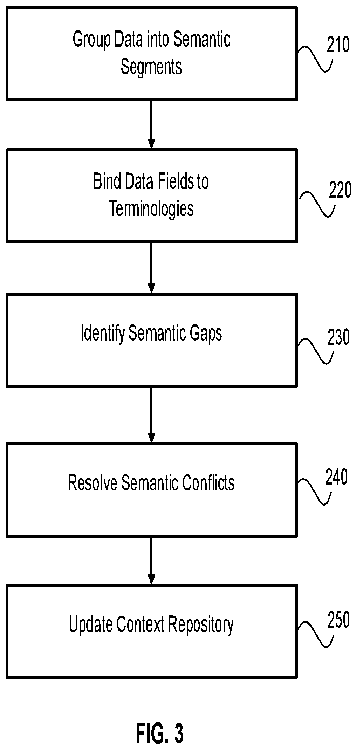

By way of example, a general service-driven method of identifying context according to a proposed embodiment is illustrated in Fig. 3.

The method begins with step 210 of grouping service data into semantic segments. That is, service data is decomposed into different groups and sub-groups thereof. The number of top-level semantic groups depends on the service interface definition. For example, it could be only one or two in some cases, or number of groups could be much larger in other cases. The aim, however, is to identify a way to make the semantic group align with existing information structure as much as possible. For instance, the process may be centered on reusing a predefined standard (e.g. the HL7 RIM standard) as much as possible without distracting the service data semantic.

In this way, the service data can be separated into different semantic segments, and the bindings to the information structure identified. The information structure may, for example, be built based on known healthcare standards like HL7 RIM, CCDA, etc.

The method then continues with the step 220 of binding data fields to terminologies (e.g. a registered/known vocabulary). In this step 220, each of the data fields is paired with the semantic term defined in the predefined terminologies. By doing this, the semantics of the data fields related to a particular service are aligned with the standardized terms (e.g. adhere to known standards, like SNOMED-CT). One approach to doing this is based on the outcome from preceding step 210 of grouping service data into semantic segments, because the alignments between semantic segments with standardized information structure may provide the constrains of mapping data fields of service to the existing terminologies.

Next, in step 230, semantic gaps are identified. In more detail, when considering the specific semantic requirements coming from a particular service, there may be gaps between those target semantic requirements and the existing standardized information structure or terminologies. This may, for example, result from requirements evolving faster than associated standardization activities. Analyzing data semantics from a particular digital service permits identification of semantic gaps. For example, the absence of semantic building blocks may be standards, and it may also be identified that a semantic determined by a standard is ambiguous for a service. Identification of semantic gaps in step 230 may be undertaken manually, automatically or semi-automatically. One exemplary approach to automatically identifying semantic gaps comprises comparing data elements collected from the service requirement and the most similar standardized data model in the repository.

The outcome of this step is to identify those semantic gaps by aligning with existing standards as much as possible.

In step 240, the identified semantics conflicts is/are resolved. This improves semantic interoperability. In particular, resolving semantic gaps is performing semantic refinement, which is a key component of meta-model of digital service. For those missing semantic building blocks, they are created in a semantic repository (including both information structure and terminology level). For the semantic building blocks with ambiguity for a target service, a more accurate semantic may be provided by defining more restrictions to them and linking the customized semantic to the appropriate healthcare contexts.

Finally, in step 240, the context repository is updated. In this way contexts may be re-used across services. That is, to enable the contexts to be re-used (and thus improve the quality of the context system), the contexts can be stored and managed via a context repository.

It is to be understood that the method described above with reference to Fig. 3 is not restricted to the specific ordering of the step described/illustrated. In other embodiments, a different ordering of the steps may be employed, and they may be undertaken iteratively all data semantics of the target service(s) are clear, accurate and/or aligned.

According to proposed concepts, there may be provided a meta model of a digital service semantic which includes:
(i) Semantic Refinement - a description that links data with appropriate contexts;
(ii) Context - an aspect that brings more specific semantic meaning to the data in the digital service(s);
(iii) Context relationship - a relationship between two or more healthcare contexts;
(iv) Context relationship type - a type description of the relationship(s) between different contexts;
(v) Service context (Service data context) - a context appropriate for describing digital services;
(vi) Data structure context (Data model context) - a context appropriate for describing data structures; and
(vii) Data field context (Data element context) - a context appropriate for describing data fields.

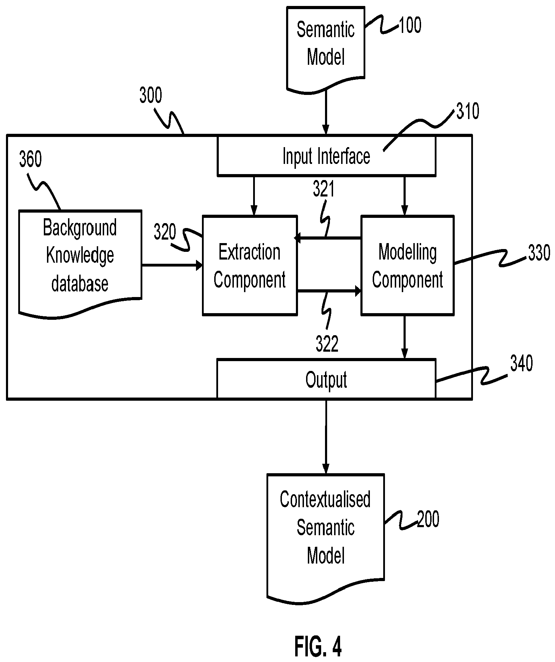

Fig. 4 is a simplified block diagram of a system for constructing a contextualized semantic model 200 according to an embodiment.

The system 300 comprises an input interface 310, an extraction component 320, a modelling component 330, an output interface 340, and a background knowledge database 360

The input interface 310 is configured to obtain (e.g. receive as in input or retrieve) a semantic model 100. The extraction component 320 is configured to extract context information at multiple levels of the semantic model 200. The modelling component 320 then refines the semantic model by combining the extracted context information, so as to generate a contextualized semantic model. The output interface 340 is configured to output the generated contextualized semantic model.

More specifically, the extraction component 320 is configured to extract context information 322 at multiple levels based on the background knowledge database 360 and the identified semantic gaps 321 output from the modelling component 330. In some embodiments, the extraction component 320 is further configured to extract context information at multiple levels of the semantic model 200 based on the semantic model 100.

The background knowledge database 360 is configured to store data including context information relevant to the service request, e.g., the data may be from the documents (e.g., article, paper, medical reports, dictionary) that include context information.

In the embodiment of Fig. 4, the modelling component 330 is configured to segment a service request (received via the input interface 310) into a plurality of semantic segments of service(s) based on the contextualized semantic model. The modelling component 330 is further configured to identify a semantic gap comprising context information between the semantic segments and the contextualized semantic model based on comparing the semantic segments with a plurality of semantic building blocks, and to then modify the contextualized semantic model to resolve the identified semantic gap.

Proposed methods and system (including those of Figs. 2 to 4) may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM. Various storage media may be fixed within a computing device or may be transportable, such that the one or more programs stored thereon can be loaded into a processor.

All of part of a schematic model according to an embodiment may be stored on a storage medium. Data according to an embodiment may be stored on the same storage medium or a different storage medium. The schematic model and/or data may be transmitted as a signal modulated onto an electromagnetic carrier wave. The signal may be defined according to a standard for digital communications. The carrier wave may be an optical carrier, a radio-frequency wave, a millimeter wave, or a near field communications wave. It may be wired or wireless.

To the extent that an embodiment is implemented partly or wholly in hardware, the blocks shown in the diagrams of Figs. 1 and 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

As used herein, a memory includes one or more of a non-transient computer readable medium; a magnetic disk or other magnetic storage medium; an optical disk or other optical storage medium; a random access memory (RAM), read-only memory (ROM), or other electronic memory device or chip or set of operatively interconnected chips; an Internet/Intranet server from which the stored instructions may be retrieved via the Internet/Intranet or a local area network; or so forth. Further, as used herein, a processor includes one or more of a microprocessor, a microcontroller, a graphic processing unit (GPU), an application-specific integrated circuit (ASIC), a field-programmable gate array (FPGA), and the like; a user input device includes one or more of a mouse, a keyboard, a touch screen display, one or more buttons, one or more switches, one or more toggles, and the like; a display device includes one or more of a liquid crystal display (LCD), an light emitting diode (LED) display, a plasma display, a projection display, a touch screen display, and the like; and databases include one or more memories.

The invention has been described with reference to the preferred embodiments. Modifications and alterations may occur to others upon reading and understanding the preceding detailed description. It is intended that the invention be construed as including all such modifications and alterations insofar as they come within the scope of the appended claims or the equivalents thereof.

It will also be understood that the disclosed methods may be computer-implemented methods. As such, there is also proposed a concept of a computer program comprising code means for implementing any described method when said program is run on a processing system.

The skilled person would be readily capable of developing a processor for carrying out any herein described method. Thus, each step of a flow chart may represent a different action performed by a processor, and may be performed by a respective module of the processing processor.

A proposed system may make use of a processor to perform data processing. The processor can be implemented in numerous ways, with software and/or hardware, to perform the various functions required. The processor typically employs one or more microprocessors that may be programmed using software (e.g. microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted that the term "adapted to" is intended to be equivalent to the term "configured to". Any reference signs in the claims should not be construed as limiting the scope.

## Claims

1. A method for constructing a contextualized semantic model (200), comprising:
extracting context information at multiple levels; and
refining a semantic model (100) by combining the context information at multiple levels so as to generate a contextualized semantic model.

2. The method of claim 1, further comprising:
segmenting a service request into a plurality of semantic segments based on the contextualized semantic model;
identifying a semantic gap comprising context information between the semantic segments and the contextualized semantic model based on comparing the semantic segments with a plurality of semantic building blocks; and
modifying the contextualized semantic model to resolve the identified semantic gap.

3. The method of claim 2, wherein modifying the contextualized semantic model to resolve the identified semantic gap further comprises refining one or more semantic building block corresponding to a semantic gap.

4. The method of claim 3, wherein the contextualized semantic model comprises a set of first data elements, a set of second data elements, a set of first data models, a set of second data models, and a set of service data models.

5. The method of claim 4, comprising:
obtaining first data elements, wherein at least one of the first data elements with ambiguous semantics;
obtaining data element contexts of the first data elements; generating second data elements with unambiguous semantics, by combining the corresponding data element contexts with the one of the first data elements;
refining first data models based on data elements with unambiguous semantics from at least one of the second data elements and first data elements, wherein at least one of the first data models with ambiguous semantics;
obtaining data model contexts of the first data models;
generating second data models with unambiguous semantics, by combining the corresponding data model context with the one of the first data models;
obtaining service data contexts from service request data model and service response data model; and
refining service data models based on the first data models, second data models, first data elements or second data elements by combining service data contexts.

6. The method of claim 5, wherein the semantic gaps being instances where, for one or more of the semantic segments, there is no equivalent elements, data models, service data models that in a semantic building block.

7. The method of claim 6, wherein refining corresponding data element, data model or service data model further comprises creating a new data element, data model or service data model in the semantic building blocks corresponding to the semantic gaps based on the context information.

8. The method of claims 2 to 7, wherein the semantic gaps include semantic ambiguities, the semantic ambiguities being instances where the associated semantic term of the contextualized semantic model is ambiguous for the service request.

9. The method of claims 4, wherein identifying semantic gaps comprises comparing the semantic segments with the service data model, the data models, and the data elements by sequence.

10. The method of claims 2, wherein identifying semantic gaps include context information at data element level, data model level and service data model level.

11. The method of any preceding claim, wherein the existing semantic model 100 is based on at least one of HL7 RIM and SNOMED CT.

12. The method of any preceding claim, wherein the semantic building blocks are stored in a semantic repository, and wherein the method further comprises:
updating a semantic repository based on the one or more semantic gaps.

13. A computer program product comprising computer program code means which, when executed on a computing device having a processing system, cause the processing system to perform all of the steps of the method according to any of claims 1 to 12.

14. A system for constructing a contextualized semantic model (200), comprising:
an extraction component configured to extract context information at multiple levels; and
a modelling component configured to refine a semantic model (100) by combining the context information at multiple levels so as to generate a contextualized semantic model.

15. The system of claim 14, wherein the modelling component is further configured to:
segment a service request into a plurality of semantic segments based on the contextualized semantic model;
identify a semantic gap comprising context information between the semantic segments and the contextualized semantic model based on comparing the semantic segments with a plurality of semantic building blocks; and
modify the contextualized semantic model to resolve the identified semantic gap.
